# EUROPEAN PATENT APPLICATION

(11) **EP 2 355 599 A1**
(43) Date of publication of application: **10.08.2011**
(21) Application number: 11000708.5
(22) Date of filing: 28.01.2011
(51) Int. Cl.: H04W 60/00

(54) **Method of improving circuit switched connectivity and related communication device**

(30) Priority: 28.01.2010 US 298917 P; 27.01.2011 US 14725
(71) Applicant: HTC Corporation, Taoyuan County 330 (TW)
(72) Inventor: Wu, Chih-Hsiang, Taoyuan City Taoyuan County 330 (TW)
(74) Representative: Emde, Eric

(57) **Abstract**

A method of improving CS connectivity for a mobile device in a wireless communication device is disclosed. The method includes attaching to a first network in a first domain and a second network in a second domain separately; and maintaining a first registration and a first mobility procedure associated with the first network, and a second registration and a second mobility procedure associated with the second network; wherein the mobile device is capable of receiving signals of the first network and signals of the second network simultaneously but transmitting signals to either the first network or the second network.

## Description

### Background of the Invention

### 1. Field of the Invention

The application relates to a method used in a wireless communication system and related communication device, and more particularly, to a method for improving circuit switched (CS) connectivity in a wireless communication system and related communication device.

### 2. Description of the Prior Art

A long-term evolution (LTE) system, initiated by the third generation partnership project (3GPP), is now being regarded as a new radio interface and radio network architecture that provides a high data rate, low latency, packet optimization, and improved system capacity and coverage. In the LTE system, an evolved universal terrestrial radio access network (E-UTRAN) includes a plurality of evolved Node-Bs (eNBs) and communicates with a plurality of mobile stations, also referred as to user equipments (UEs).

LTE technology supports packet based services only. However 3GPP does specify fallback for circuit switched (CS) services as well. To achieve this, LTE architecture and network nodes require additional functionality. CS Fallback defines a mechanism for using a CS legacy network (e.g. Global System for Mobile communications (GSM) or Universal Mobile Telecommunications System (UMTS)) to provide voice services along side of an LTE network. CS fallback provides voice and traditional CS-domain services (e.g. voice call, video call, short message service (SMS), Unstructured Supplementary Service Data (USSD), supplementary service). To provide these CS services, LTE reuses CS infrastructure when the UE is served by E-UTRAN.

A UE with multi-modes supports multiple radio access technologies (RATs), such as GSM, UMTS, and LTE systems. A connection established in LTE can be handover to GSM or UMTS system and vice versa. Since the LTE system supports packet based services only, the aforementioned CS services in the GSM or UMTS systems are not supported in the LTE system. To make the CS services available to UEs camped on the LTE network, a CS fallback procedure is designed. When the UE initiates a CS service or receives a paging of the CS services in the LTE system, the UE is forced to connect to the GSM or UMTS system using "inter-RAT handover to GSM or UMTS", "cell change order (CCO) to GSM or UMTS", or "RRC connection release with redirection to GSM or UTMS". The "inter-RAT handover", "CCO" and "RRC connection release" procedures are specified in 3GPP TS 36.331 v9.1.0.

CS fallback procedure makes the UE in the LTE system keep using the CS services. However, in the CS fallback procedure, the UE takes time to connect to the GSM or UMTS systems from the LTE system. When performing the CCO or RRC connection release procedures, the UE takes time to search a cell in the GSM or UMTS system, synchronize to the cell, read system information of the cell and then perform random access to establish a connection. The inter-RAT handover procedure may save the time to connect to the cell in the GSM or UMTS system if the UE measured the cell but requires more coordination (e.g. signaling exchange) between the LTE and GSM or UMTS networks.

### Summary of the Invention

A method of improving circuit switched (CS) connectivity for a mobile device in a wireless communication system and a related communication device are provided.

A method of improving CS connectivity for a mobile device in a wireless communication device is disclosed. The method comprises attaching to a first network in a first domain and a second network in a second domain separately; and maintaining a first registration and a first mobility procedure associated with the first network, and a second registration and a second mobility procedure associated with the second network; wherein the mobile device is served by the second network, capable of receiving signals of the first network and signals of the second network simultaneously but transmitting signals to either the first network or the second network.

A communication device for improving CS connectivity in a wireless communication system is disclosed. The communication device comprising means for attaching to a first network in a first domain and a second network in a second domain separately; and means for maintaining a first registration and a first mobility procedure associated with the first network, and a second registration and a second mobility procedure associated with the second network; wherein the mobile device is served by the second network, capable of receiving signals of the first network and signals of the second network simultaneously but transmitting signals to either the first network or the second network.

These and other objectives of the present invention will no doubt become obvious to those of ordinary skill in the art after reading the following detailed description of the preferred embodiment that is illustrated in the various figures and drawings.

### Brief Description of the Drawings

FIG. 1 is a schematic diagram of an exemplary wireless communication system.
FIG.2 is a schematic diagram of an exemplary communication device.
FIG.3 illustrates the program code in FIG.2
FIG.4 is a flow chart of an exemplary process.

### Detailed Description

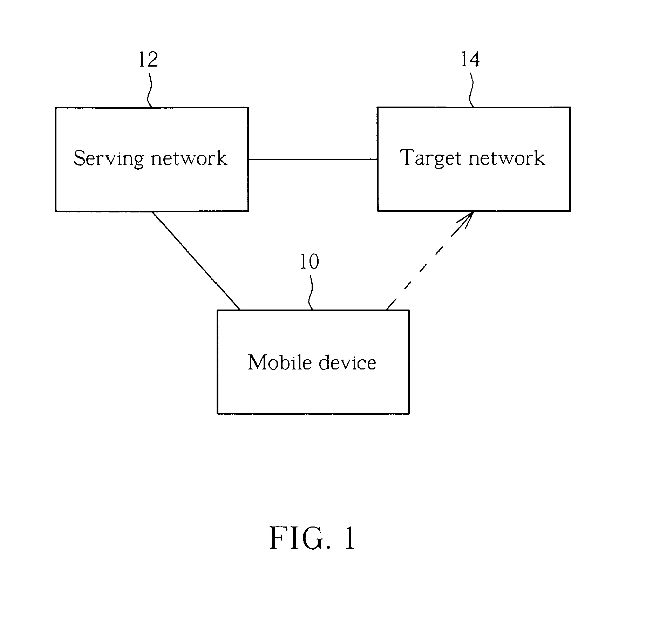

Please refer to Fig. 1, which simply illustrates an exemplary wireless communication system 10. In Fig. 1, a serving network 12 and a target network 14 employ different radio access technologies (RATs), and the mobile device 10 supporting both of the RATs is served by the serving network 12. The serving network 12 supports a single service domain and may be referred as to a LTE (long-term evolution) or a HSPA+ (High Speed Packet Access Plus) system network only supporting a PS (Packet Switched) service domain. The target network 14 supports multiple service domains and may be referred as to a network of a UMTS (Universal Mobile Telecommunications System) system, a GSM system or a GERAN lu mode system supporting both PS (Packet Switched) and CS (Circuit Switched) service domains. In the UMTS system, the network is referred as a Universal Terrestrial Radio Access Network (UTRAN) comprising a radio network controller (RNC) and a plurality of NBs (Node Bs); In the GSM/ GERAN lu mode system, the network is referred as a GERAN comprising a base station controller (BSC) and a plurality of base stations; In the LTE system, the network is referred as a evolved-UTRAN (E-UTRAN) comprising a plurality of eNBs (evolved-Node Bs). The mobile device is referred as to a user equipment (UEs) or a mobile station (MS) supporting the abovementioned RATs and may be a device such as a mobile phone, a computer system, etc. Besides, the networks 12 and 14 and the mobile device can be seen as a transmitter or receiver according to transmission direction, e.g., for uplink (UL), the mobile device is the transmitter and the networks 12 and 14 are the receivers, and for downlink (DL), the networks 12 and 14 are the transmitters and the mobile device is the receiver. When a subscriber intends to have CS services (e.g. voice call, video call, short message service (SMS), Unstructured Supplementary Service Data (USSD), supplementary service), the mobile device makes a service request to the serving network 12, performing CS fallback to redirect the UE to the target network 14. To provide these services, CS fallback allows the serving network 12 reuses CS infrastructure of the target network 14 when the mobile device is served by the serving network 12.

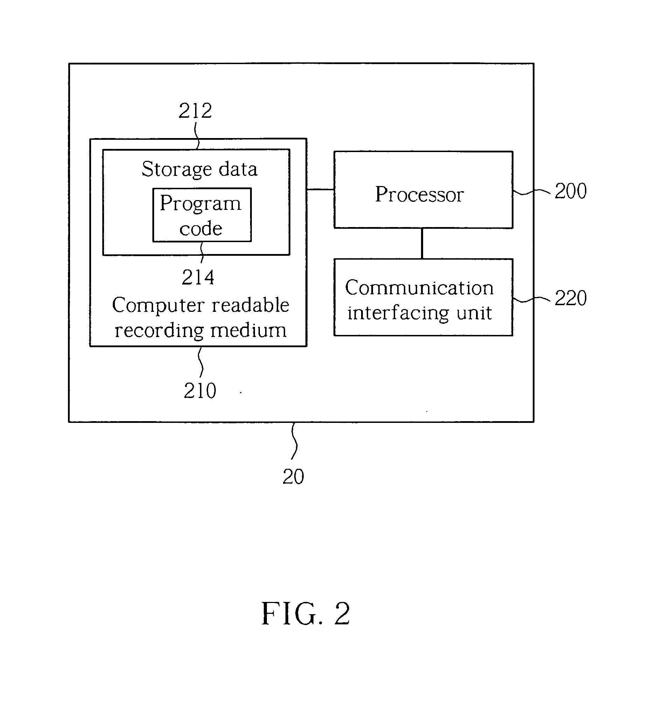

Please refer to FIG.2, which is a schematic diagram of an exemplary communication device 20. The communication device 20 can be the mobile device or the network shown in FIG. 1 and includes a processor 200, a computer readable recording medium 210 and a communication interfacing unit 220. The computer readable recording medium 210 may be any data storage device that stores storage data 212, including program code 214, thereafter read and processed by the processor 200. Examples of the computer readable recording medium 210 includes a subscriber identity module (SIM), read-only memory (ROM), random-access memory (RAM), CD-ROMs, magnetic tapes, hard disks, optical data storage devices, and carrier waves (such as data transmission through the Internet). The communication interfacing unit 220 is preferably a radio transceiver for wirelessly communicating with other communication devices and can transform process results from the processor 200 into radio signals.

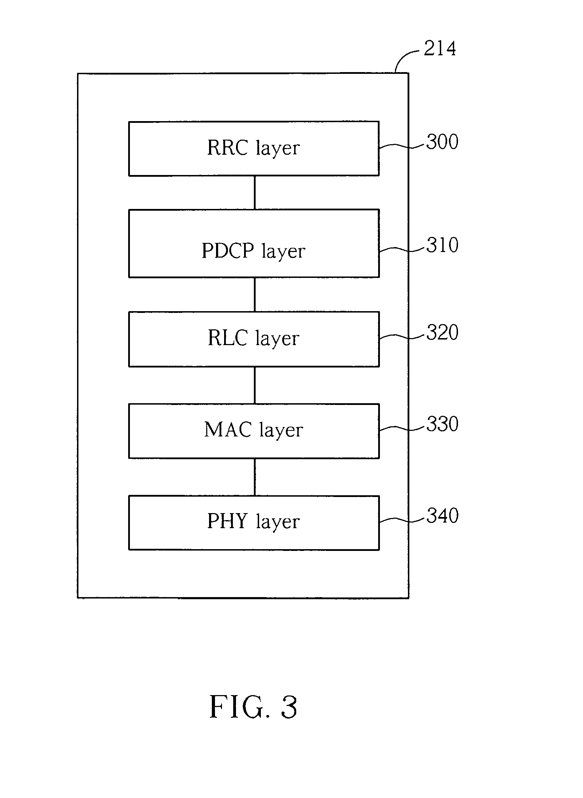

Please refer to Fig. 3, which illustrates the program code 214 in FIG.2. The program code 214 includes program code of multiple communications protocol layers, which from top to bottom are a radio resource control (RRC) layer 300, a packet data convergence protocol (PDCP) layer 310, a radio link control (RLC) layer 320, a medium access control (MAC) layer 330 and a physical (PHY) layer 340.

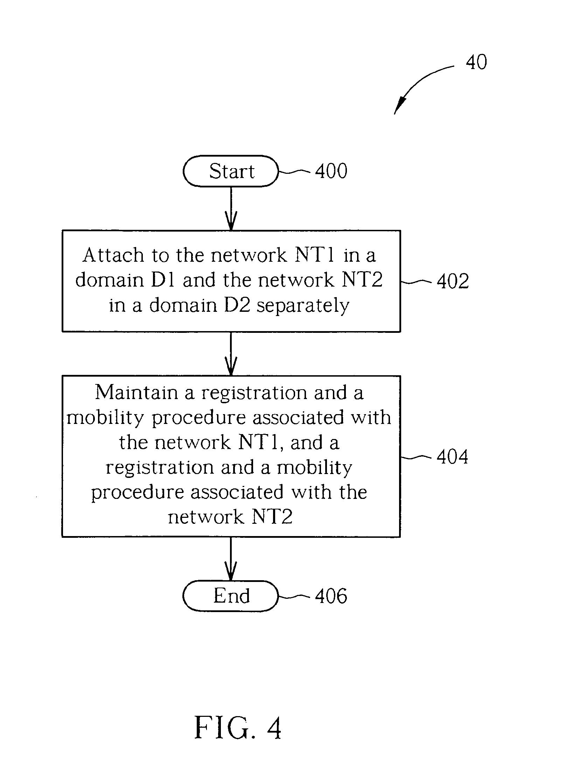

Please refer to FIG.4, which is a flow chart of an exemplary process 40. The process 40 is used for improving CS connectivity for a UE in the wireless communication system 10. The UE is capable of receiving signals of a network NT1 and signals of a network NT2 simultaneously but transmitting signals to either the network NT1 or the network NT2. The process 40 can be compiled into the program code 214 and include the following steps:
Step 400: Start.
Step 402: Attach to the network NT1 in a domain D1 and the network NT2 in a domain D2 separately.
Step 404: Maintain a registration and a mobility procedure associated with the network NT1, and a registration and a mobility procedure associated with the network NT2.
Step 406: End.

According to the process 40, the UE receives signals of the network NT2 and signals of the network NT1 both. Then the UE may separately attach to the network NT1 in the domain D1 and the network NT2 in the domain D2. The UE may maintain the registration and the mobility procedure associated with the network NT1 and the registration and the mobility procedure associated with the network NT2. Therefore, when the UE receives a paging for services in the domain D1, for example a CS mobile-originated call or a CS mobile-terminated call, the UE may directly initiate the services in the domain D1 in the network NT1. The network NT1 could be the target network 14, referred as to a Global System for Mobile communication (GSM) network or a Universal Mobile Telecommunication System (UMTS) network, i.e. GERAN or UTRAN, respectively. The domain D1 may be referred as to a CS domain. The network NT2 could be the serving network 12, referred as to a LTE network (i.e. E-UTRAN). The domain D2 may be referred as to a PS domain. In other words, the UE attaches to E-UTRAN as well as GREAN/UTRAN. The UE separately registers with E-UTRAN and GREAN/UTRAN and maintains the related mobility procedure of E-UTRAN and the related mobility procedure of GREAN/UTRAN, both. As a result, the UE directly initiates CS services (e.g. voice call, video call, SMS, USSD, supplementary service) in GSM/UMTS network without wasting time on synchronization and cell searching since the UE has exchanged signals with GSM/UMTS network in advance. So it is more time-saving for the UE to switch from the LTE network to the GSM/UMTS network. Besides, coordination between the LTE network and the GSM/UMTS network is no longer required. Please note that the UE is equipped with two receivers (one for the GSM/UMTS network, other one for the LTE network) and one transmitter and has only one Universal Subscriber Identity Module (USIM) card inserted (i.e. only one subscription information is maintained in the UE for both of GSM/UMTS and LTE networks). The UE may send a message to indicate to the LTE network that the UE is capable of receiving signals from the GSM/UMTS and the LTE network simultaneously but transmitting signals to either the GSM/UMTS or the LTE network.

When the UE initiates the services in the domain D1 to network NT1, the UE disconnects from the network NT2. The UE may turn off the receiver which is used for receiving signals of the network NT2. In addition, the UE may send a message msg1 to indicate to the network NT2 that the UE is leaving the network NT2 because the UE initiates the services in the domain D1. The message msg1 may be referred as to an extended service request with CS fallback indicator or a detach request message. If the UE has a connection in the network NT2, the UE releases the connection in the network NT2. Besides, the UE may have data transfer or services in the domain D2 in the network NT1. In this situation, the UE performs registration in the domain D2 with the network NT1. After the UE terminates the service in the domain D1 or enters an idle mode, the UE reselects the network NT1 when the domain D1 is required and reselects the network NT2 when the domain D2 is required.

Taking an example, when the UE initiates the CS services (e.g. voice call, video call, SMS, USSD, supplementary service) to the GSM/UMTS network, the UE disconnects from the LTE network. The UE may turn off the receiver which is used for receiving signals of the LTE network. In addition, the UE may send an extended service request with CS fallback indicator or a detach request message to indicate to the LTE network that the UE is leaving the LTE network because the UE initiates the CS services. If the UE has an RRC connection in the LTE network, the UE releases the RRC connection in the LTE network. As known, the GSM/UMTS network may support CS domain and PS domain both. The UE may have PS data transfer or PS services in the GSM/UMTS network. In this situation, the UE performs registration in the PS domain with the GSM/UMTS network and sends PS data if the UE has PS data to send in the GSM/UMTS network. The registration may be referred as to a GPRS attach procedure or Routing Area Updating procedure.

After the UE terminates the CS services or enters an idle mode, the UE reselects the GMS/UMTS network when the CS domain is required and reselects the LTE network when the PS domain is required. Contrary to the prior art, the UE reselects the LTE network without meeting inter-RAT cell reselection criteria. In other words, the UE reselects the LTE network for the PS domain even if the inter-RAT cell reselection criteria for "GSM/UMTS to LTE" cell reselection is not met. When the UE reselects the LTE network for the PS domain, the UE performs a Tracking Area Update procedure or GPRS attach procedure to inform the LTE network.

Please note that the abovementioned steps including suggested steps can be realized by means that could be hardware, firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include system on chip (SOC), system in package (Sip), computer on module (COM), and the communication device 20 in which the processor 200 processes the program code 214 related to the abovementioned processes and the processed results can perform feedback load reduction in the wireless communications system 20.

To sum up, the UE capable of receiving signals of the LTE and GSM/UMTS networks attaches to the LTE and the GSM/UMTS network separately. Then, the UE maintains the registration and the mobility procedure associated with the LTE network and the registration and the mobility procedure associated with the GSM/UMTS network. When the UE in the LTE network receives a paging for the CS services, the UE may directly initiate the CS services in the GSM/UMTS network without wasting time on synchronization and cell searching. It is more time-saving for the UE to switch from the LTE network to the GSM/UMTS network.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method of improving circuit switched (CS) connectivity for a mobile device in a wireless communication system, the method comprising:
attaching to a first network in a first domain and a second network in a second domain separately; and
maintaining a first registration and a first mobility procedure associated with the first network, and a second registration and a second mobility procedure associated with the second network;
wherein the mobile device is capable of receiving signals of the first network and signals of the second network simultaneously but transmitting signals to either the first network or the second network.

2. The method of claim 1, wherein the first network is a Global System for Mobile communication (GSM) network or a Universal Mobile Telecommunication System (UMTS) network; the first domain is a CS domain; the second network is a Long Term Evolution (LTE) network; the second domain is a Packet Switched (PS) domain.

3. The method of claim 1 further comprising:
initiating a service in the first domain in the first network; and
disconnecting from the second network.

4. The method of claim 3 further comprising:
sending a first message to the second network, wherein the first message indicates to the second network that the mobile device is leaving the second network; and
releasing a connection in the second network when the mobile device has the connection in the second network.

5. The method of claim 3 further comprising:
performing registration in the second domain with the first network.

6. The method of claim 3 further comprising:
terminating the service in the first domain or entering an idle mode;
reselecting the first network when the first domain is required and reselecting the second network when the second domain is required.

7. The method of claim 6 further comprising performing a tracking Area Update procedure or GPRS attach procedure when the second network is selected for the second domain.

8. The method of claim 1 further comprising sending a second message to the second network, wherein the second message indicates the mobile device is capable of receiving signals of the first network and signals of the second network simultaneously but transmitting signals to either the first network or the second network.

9. The method of claim 1, wherein the mobile device is only equipped with one Universal Subscriber Identity Module (USIM) card.

10. A communication device for improving circuit switched (CS) connectivity in a wireless communication system, the communication device comprising:
means for attaching to a first network in a first domain and a second network in a second domain separately; and
means for maintaining a first registration and a first mobility procedure associated with the first network, and a second registration and a second mobility procedure associated with the second network;
wherein the mobile device is capable of receiving signals of the first network and signals of the second network simultaneously but transmitting signals to either the first network or the second network.

11. The communication device of claim 10, wherein the first network is a Global System for Mobile communication (GSM) network or a Universal Mobile Telecommunication System (UMTS) network; the first domain is a CS domain; the second network is a Long Term Evolution (LTE) network; the second domain is a Packet Switched (PS) domain.

12. The communication device of claim 10 further comprising:
means for initiating a service in the first domain in the first network; and
means for disconnecting from the second network.

13. The communication device of claim 12 further comprising:
means for sending a first message to the second network, wherein the first message indicates to the second network that the mobile device is leaving the second network; and
means for releasing a connection in the second network when the mobile device has the connection in the second network.

14. The communication device of claim 12 further comprising:
means for performing registration in the second domain with the first network.

15. The communication device of claim 12 further comprising:
means for terminating the service in the first domain or entering an idle mode;
means for reselecting the first network when the first domain is required and reselecting the second network when the second domain is required.
